(19) Europäisches Patentamt
European Patent Office
Office européen des brevets

(11) **EP 4 395 148 A1**

(12) **EUROPEAN PATENT APPLICATION**
published in accordance with Art. 153(4) EPC

(43) Date of publication:
**03.07.2024 Bulletin 2024/27**

(21) Application number: **22880769.9**

(22) Date of filing: **27.09.2022**

(51) International Patent Classification (IPC):
**H02M 3/00** $^{(2006.01)}$       **H02J 1/00** $^{(2006.01)}$

(52) Cooperative Patent Classification (CPC):
**H02J 1/00; H02M 3/00**

(86) International application number:
**PCT/JP2022/035991**

(87) International publication number:
**WO 2023/063073 (20.04.2023 Gazette 2023/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.10.2021   JP 2021169021**

(71) Applicant: **OMRON Corporation
Kyoto-shi, Kyoto 600-8530 (JP)**

(72) Inventor: **UEMATSU, Takeshi
Kyoto-shi, Kyoto 600-8530 (JP)**

(74) Representative: **Isarpatent
Patent- und Rechtsanwälte
Barth Hassa Peckmann & Partner mbB
Friedrichstraße 31
80801 München (DE)**

(54) **POWER CONVERTER AND DC POWER SUPPLY SYSTEM**

(57)     A power conversion device that converts DC power input from a DC power supply and outputs the DC power, the power conversion device including: an output current value acquisition unit acquiring an output current value; an output voltage value acquisition unit acquiring an output voltage value; and a controller controlling an output voltage. The controller includes a correction value generator configured to generate an output current correction value, based on an output current target value that is a target value of an output current, and the output current value, and a droop controller configured to droop an output voltage target value that is a target value of the output voltage, based on a corrected output current value that is the output current value corrected using the output current correction value. The output voltage is controlled based on the output voltage target value dropped and the output voltage value.

Fig. 1

EP 4 395 148 A1

**Description**

TECHNICAL FIELD

The present invention relates to a power conversion device and a direct current (DC) power supply system.

BACKGROUND ART

Conventionally, parallel operation control of a DC power supply system, which supplies DC power using a plurality of converters with a storage battery as a power source, mainly includes two schemes of a master-slave scheme and a droop control scheme.

In the master-slave scheme, generally, one of a plurality of devices serves as a master, the master performs output voltage control, and the slave performs output current control. As a result, the converter can be controlled to an arbitrary voltage and current, and the discharge current of the storage battery can also be controlled. However, such a scheme reduces the degree of freedom and reliability of the system because control is performed based on information on all converters and storage batteries.

The droop control scheme is a highly reliable system that can be controlled without exchanging information between each converter by giving the output voltage of each converter a droop characteristic due to the output current. However, the accuracy of the output voltage is lower than that of the master-slave scheme, and the discharge current of the storage battery cannot be set to an arbitrary value. A power conversion system described in Patent Document 1 employing such a droop control scheme presents a method of setting a target current for droop control and controlling a discharge current of a storage battery. However, at this target current, the load current is detected, and a target value is set accordingly.

PRIOR ART DOCUMENT

PATENT DOCUMENT

Patent Document 1: Japanese Unexamined Patent Publication No. 2020-120465

SUMMARY OF THE INVENTION

PROBLEMS TO BE SOLVED BY THE INVENTION

The present invention has been made in view of the above problem, and an object thereof is to provide a technique that is highly reliable and capable of controlling an output current.

MEANS FOR SOLVING THE PROBLEM

The present invention for solving the above problems is a power conversion device that steps up, steps up and down, or steps down DC power input from a DC power supply and outputs the DC power, the power conversion device including:

an output current value acquisition unit configured to acquire an output current value output from the power conversion device;
an output voltage value acquisition unit configured to acquire an output voltage value output from the power conversion device; and
a controller configured to control an output voltage output from the power conversion device,
in which the controller includes

a correction value generator configured to generate an output current correction value for correcting the output current value, based on an output current target value that is a target value of an output current output from the power conversion device, and the output current value, and
a droop controller configured to droop an output voltage target value that is a target value of the output voltage output from the power conversion device, based on a corrected output current value that is the output current value corrected using the output current correction value, and

the output voltage is controlled based on the output voltage target value dropped and the output voltage value.

According to this, since the output voltage is controlled by the droop control using the output current, it is not necessary to exchange information with another power conversion device even when a plurality of power conversion devices are operated in parallel, allowing for highly reliable control. In addition, since the droop control of the output voltage is performed based on the corrected output current value corrected using the output current correction value that is generated based on the output current target value and the output current value, the output current can also be controlled.

Further, in the present invention, the correction value generator may adjust the output current correction value, based on a difference between the output current target value and the output current value.

In a case where the DC power output from the power conversion device is supplied to a load, the magnitude of the current output from the own power conversion device to the load can be determined from the difference between the output current target value and the output current value. Therefore, the current correction value can be adjusted accordingly to enable more appropriate control of the output current.

Further, the present invention relates to: a DC power supply system including:

a Type 2 power conversion device; and
a Type 2 power conversion device,

the Type 1 power conversion device being configured to step up, step up and down, or step down DC power input from a Type 1 DC power supply and outputting the DC power,
the Type 1 power conversion device including

a Type 1 output current value acquisition unit configured to acquire a Type 1 output current value output from the Type 1 power conversion device,
a Type 1 output voltage value acquisition unit configured to acquire a Type 1 output voltage value output from the Type 1 power conversion device, and
a Type 1 controller configured to control a Type 1 output voltage output from the Type 1 power conversion device,

the Type 1 controller including

a correction value generator configured to generate a Type 1 output current correction value for correcting the Type 1 output current value, based on a Type 1 output current target value that is a target value of a Type 1 output current output from the Type 1 power conversion device, and the Type 1 output current value, and
a Type 1 droop controller configured to droop a Type 1 output voltage target value that is a target value of the Type 1 output voltage output from the Type 1 power conversion device, based on a Type 1 corrected output current value that is the Type 1 output current value corrected using the Type 1 output current correction value,

the Type 1 output voltage being controlled based on the Type 1 output voltage target value dropped and the Type 1 output voltage value,
the Type 2 power conversion device being configured to step up, step up and down, or step down DC power input from a Type 2 DC power supply and outputting the DC power,
the Type 2 power conversion device including

a Type 2 output current value acquisition unit configured to acquire a Type 2 output current value output from the Type 2 power conversion device,
a Type 2 output voltage value acquisition unit configured to acquire a Type 2 output voltage value output from the Type 2 power conversion device, and
a Type 2 controller configured to control a Type 2 output voltage output from the Type 2 power conversion device,

the Type 2 controller including a Type 2 droop controller configured to droop a Type 2 output voltage target value that is a target value of the Type 2 output voltage output from the Type 2 power conversion device, based on the Type 2 output current value,
the Type 2 output voltage being controlled based on the Type 2 output voltage target value dropped and the Type 2 output voltage value, and
a plurality of the Type 1 power conversion devices and one or more of the Type 2 power conversion devices being connected in parallel to supply DC power to a load.

According to this, since the output voltage is controlled by the droop control using the output current in both the Type 1 power conversion device and the Type 2 power conversion device, there is no need to exchange information with another power conversion device operated in parallel, and a highly reliable DC power supply system can be constructed. In addition, since the Type 1 power conversion device performs the droop control of the Type 1 output voltage based on the Type 1 corrected output current value corrected using the Type 1 output current value that is generated based on the Type 1 output current target value and the Type 1 output current value, the Type 1 output current can also be controlled. As described above, the Type 2 power conversion device connected in parallel with the Type 1 power conversion device capable of controlling the Type 1 output current performs the droop control of the Type 2 output voltage based on the Type 2 output current value. Therefore, it is possible to absorb the fluctuation of the current supplied to the load, and it is possible to construct the DC power supply system capable of controlling the Type 1 output current and performing stable output voltage control.

Further, the present invention relates to a DC power supply system including

a plurality of power conversion devices configured to step up, step up and down, or step down DC power input from a DC power supply and output the DC power,
the DC power supply system supplying a load with DC power output from the plurality of power conversion devices connected in parallel,
each of the power conversion devices including

an output current value acquisition unit configured to acquire an output current value output from the power conversion device
an output voltage value acquisition unit configured to acquire an output voltage value output from the power conversion device and
a controller configured to control an output voltage output from the power conversion device,

the controller including

a correction value generator configured to generate an output current correction value for correcting the output current value, based on an output current target value that is a target value of an output current output from the power conversion device, and the output current value, and
a droop controller configured to droop an output voltage target value that is a target value of the output voltage output from the power conversion device, based on a corrected output current value that is the output current value corrected using the output current correction value,

the output voltage being controlled based on the output voltage target value dropped and the output voltage value, and
a sum of the output current target value, for each of the plurality of the power conversion devices, being equal to a load current supplied to the load.

According to this, since the output voltage is controlled by the droop control using the output current in any of the plurality of power conversion devices connected in parallel, there is no need to exchange information with another power conversion device operated in parallel, and a highly reliable DC power supply system can be constructed. In addition, the droop control of the output voltage is performed based on the corrected output current value corrected using the output current correction value that is generated on the basis of the output current target value and the output current value. Thereby, the sum of the output current target value of each power conversion device capable of controlling the output current is equal to the load current. Accordingly, the load current can be appropriately shared by the power conversion devices, and a DC power supply system capable of performing stable output voltage control can be constructed.

Further, the present invention relates to a DC power supply system including

a plurality of power conversion devices configured to step up, step up and down, or step down DC power input from a DC power supply and output the DC power,

the DC power supply system supplying a load with DC power output from the plurality of power conversion devices connected in parallel,
each of the power conversion devices including

an output current value acquisition unit configured to acquire an output current value output from the power conversion device
an output voltage value acquisition unit configured to acquire an output voltage value output from the power conversion device and

a controller configured to control an output voltage output from the power conversion device,

the controller including

a correction value generator configured to generate an output current correction value for correcting the output current value, based on an output current target value that is a target value of an output current output from the power conversion device, and the output current value, the correction value generator being configured to increase or decrease the output current correction value in accordance with a relationship between the output voltage value and a predetermined output voltage range, and a relationship between the output current value and a predetermined output current range, and

a droop controller configured to droop an output voltage target value that is a target value of the output voltage output from the power conversion device, based on a corrected output current value that is the output current value corrected using the output current correction value, and

the output voltage being controlled based on the output voltage target value dropped and the output voltage value.

According to this, since the output voltage is controlled by the droop control using the output current in any of the plurality of power conversion devices connected in parallel, there is no need to exchange information with another power conversion device operated in parallel, and a highly reliable DC power supply system can be constructed. In addition, when the droop control of the output voltage is performed based on the corrected output current value corrected using the output current correction value that is generated on the basis of the output current target value and the output current value, the output current correction value is increased or decreased in accordance with the relationship between the output voltage value and the predetermined output voltage range, and the relationship between the output current value and the predetermined output current range. Thereby, it is possible to construct a DC power supply system capable of keeping the output voltage within the predetermined range and controlling the output current of each power conversion device.

EFFECT OF THE INVENTION

According to the present invention, it is possible to provide a technique that is highly reliable and capable of controlling an output current.

BRIEF DESCRIPTION OF THE DRAWINGS

Fig. 1 is a diagram illustrating a schematic configuration of a DC power supply system according to an embodiment of the present invention.
Fig. 2 is a diagram illustrating a principle of droop control according to the embodiment of the present invention.
Fig. 3 is a diagram illustrating a schematic configuration of another DC power supply system according to the embodiment of the present invention.
Fig. 4 is a diagram illustrating a simulation result in another DC power supply system according to the embodiment of the present invention.
Fig. 5 is a diagram illustrating a schematic configuration of another DC power supply system according to the embodiment of the present invention.
Fig. 6 is a diagram illustrating a simulation result in another DC power supply system according to the embodiment of the present invention.
Fig. 7 is a diagram illustrating a simulation result in a DC power supply system according to a modification of the present invention.
Fig. 8 is a flowchart illustrating a procedure for a cross current target value adjustment process in the DC power supply system according to the modification of the present invention.
Fig. 9 is a diagram illustrating another simulation result in the DC power supply system according to the modification of the present invention.

MODE FOR CARRYING OUT THE INVENTION

[Application examples]

Hereinafter, application examples of the present invention will be described with reference to the drawings.

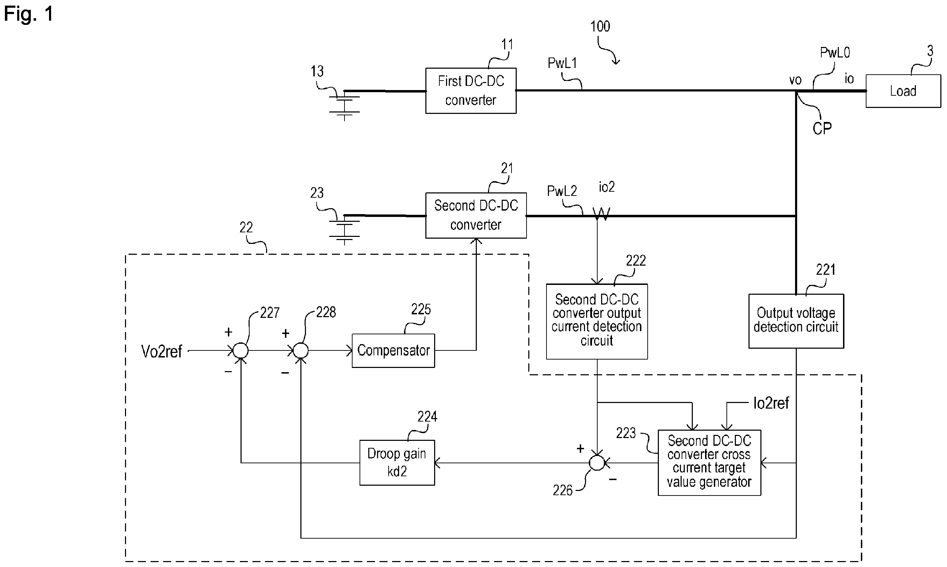

Fig. 1 is a diagram illustrating a schematic configuration of a DC power supply system 100 according to an application example of the present invention. The DC power supply system 100 includes a first DC-DC converter 11 that steps up, steps up and down, or steps down a voltage of DC power discharged from a storage battery 13 and outputs the voltage, and a second DC-DC converter 21 that steps up, steps up and down, or steps down a voltage of DC power discharged from a storage battery 23 and outputs the voltage. The DC power supply system 100 performs parallel operation of the first DC-DC converter 11 and the second DC-DC converter 21 connected in parallel to the load 3 to supply the DC power to a load 3.

The second DC-DC converter 21 includes an output voltage detection circuit 221, a second DC-DC converter output current detection circuit 222, and a controller 22. The controller 22 includes a second DC-DC converter cross current target value generator 223, a droop gain (kd2) multiplier 224, a compensator 225, and addition points 226, 227, 228.

An output voltage value vo is input from the output voltage detection circuit 221 to the second DC-DC converter cross current target value generator 223, and the second DC-DC converter output current (hereinafter simply referred to as an "output current" unless otherwise specified) io2 is input from the second DC-DC converter output current detection circuit 222. Further, the output current target value lo2ref of the second DC-DC converter 21 (hereinafter simply referred to as an "output current target value" unless otherwise specified) is also input to the second DC-DC converter cross current target value generator 223. The second DC-DC converter cross current target value generator 223 generates the second DC-DC converter cross current target value (hereinafter simply referred to as a "cross current target value" unless otherwise specified) Icr2ref based on at least the output voltage value vo, the output current value io2, and the output current target value lo2ref.

The output voltage value vo is subtracted from a value obtained by subtracting, from a second DC-DC converter output voltage target value vo2ref, a value obtained by multiplying a value, obtained by subtracting the cross current target value Icr2ref from the output current value io2, by the droop gain kd2, and the resultant value is input to the compensator 225. An output voltage vo2 of the second DC-DC converter 21 is controlled based on a command value output from the compensator 225.

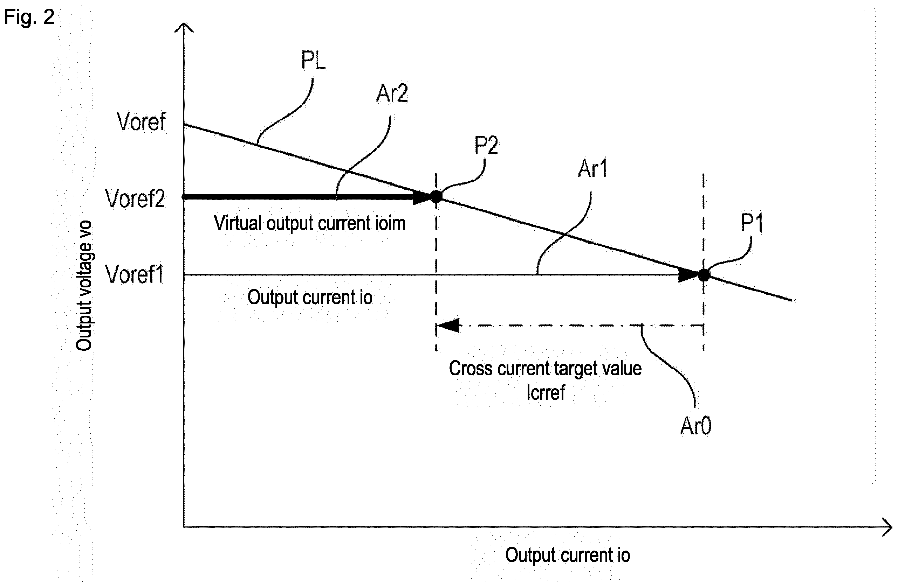

Fig. 2 is a diagram for explaining the principle of the droop control performed by the controller 22 of the second DC-DC converter 21. Fig. 2 is a graph with the output current value io2 on the horizontal axis and the output voltage value vo2 on the vertical axis. A straight line with a rightward slope kd2 from the output voltage target value Vo2ref, which is the intersection with the vertical axis, is a characteristic line PL of droop control. The output current value io2 detected by the second DC-DC converter output current detection circuit 222 is indicated by a thin arrow Ar1 parallel to the horizontal axis. An intersection P1 between the arrow Ar1 and the characteristic line PL corresponds to the output voltage target value Vo2ref1. In the control system illustrated in Fig. 1, a value obtained by subtracting the cross current target value Icr2ref, indicated by a dash-dot arrow, from the output current value io2 is multiplied by the droop gain kd2. This means that in Fig. 2, the droop characteristic is applied to the output current value (virtual output current value), which is a value equal to the value obtained by subtracting the cross current target value Icr2ref indicated by the dash-dot arrow from the output current value io2, indicated by a thick arrow Ar2 parallel to the horizontal axis. At this time, the output voltage target value Vo2ref decreases to an output voltage target value Vo2ref2 corresponding to an intersection P2 between the arrow Ar2 and the characteristic line PL. As described above, in the main droop control, the output voltage target value Vo2ref is not caused to droop to the output voltage target value Vo2ref1 obtained by the droop control based on the output current value io2, but is caused to droop to the output voltage target value Vo2ref2 obtained by the droop control based on a virtual output current value io2im.

With the main droop control as described above, the second DC-DC converter 21 can be operated in parallel without exchanging information with the first DC-DC converter 11 connected in parallel, and the highly reliable DC power supply system 100 can be constructed. In addition, the output current io2 and the like of each of the DC-DC converters 11, 21 operated in parallel can be controlled.

[First Embodiment]

Hereinafter, a DC power supply system 100 according to a first embodiment of the present invention will be described in more detail with reference to the drawings. However, the configuration of the device and the system described in each of the embodiments should be appropriately changed according to various conditions. That is, the scope of the present invention is not intended to be limited to the following embodiments.

Fig. 1 is a diagram illustrating a schematic configuration of a first DC-DC converter 11, a second DC-DC converter 21, and a controller 22 constituting the DC power supply system 100 according to the first embodiment of the present invention. The controller of the first DC-DC converter 11 has the same configuration as the controller 22 of the second DC-DC converter 21, but the description thereof will be omitted. In Fig. 1, the second DC-DC converter 21 and the controller 22 are separately described for the sake of description, but as a specific device, the controller 22 is housed in a housing of the second DC-DC converter 21 (the same applies to a DC-DC converter to be described below). Here, the DC power supply system 100 corresponds to the DC power supply system of the present invention, and the first DC-DC converter 11 and the second DC-DC converter 21 correspond to the power conversion device and the Type 1 power conversion device of the present invention.

The DC power supply system 100 includes the first DC-DC converter 11 that steps up, steps up and down, or steps down a voltage of DC power discharged from the storage battery 13, and outputs the voltage, and the second DC-DC converter 21 that steps up, steps up and down, or steps down the voltage of DC power discharged from the storage battery 23, and outputs the voltage. In the DC power supply system 100, the two DC-DC converts, which are the first DC-DC converters 11 and the second DC-DC converters 21, are connected in parallel to the load 3 and operated in parallel to supply DC power to the load 3. Although Fig. 1 illustrates the DC power supply system 100 including the first and second DC-DC converters 11, 21 respectively connected to the two storage batteries 13, 23, the DC power supply system 100 may include three or more storage batteries and DC-DC converters connected in parallel. Various distributed power supplies can be employed as the DC power supply, which is not limited to the storage battery. Here, the storage batteries 13, 23 correspond to the DC power supply and the Type 1 DC power supply of the present invention.

A voltage (output voltage) at a connection point CP to which an output line PwL1 of the first DC-DC converter 11 and an output line PwL2 of the second DC-DC converter 21 are connected is shown by vo, and a current (load current) supplied to the load 3 through a power line PwL0 is shown by io.

The second DC-DC converter 21 includes an output voltage detection circuit 221, a second DC-DC converter output current detection circuit 222, and a controller 22. The controller 22 includes a second DC-DC converter cross current target value generator 223, a droop gain (kd2) multiplier 224, a compensator 225, and addition points 226, 227, 228. The controller 22 can include a computer including a central processing unit (CPU) and a memory, a digital signal processor (DSP), an application specific integrated circuit (ASIC), and the like. Some or all of the functions of the respective units may be realized by executing software in hardware, or may be realized by dedicated hardware. The controller 22 corresponds to the controller and the Type 1 controller of the present invention.

The output voltage detection circuit 221 detects the output voltage value vo at the connection point CP. The second DC-DC converter output current detection circuit 222 detects a current (second DC-DC converter output current) io2 flowing through the output line PwL2 that connects the output terminal of the second DC-DC converter 21 and the connection point CP. The output voltage value vo is input from the output voltage detection circuit 221 to the second DC-DC converter cross current target value generator 223, and the second DC-DC converter output current value (hereinafter simply referred to as an "output current value" unless otherwise specified) io2 is input from the second DC-DC converter output current detection circuit 222. Further, the output current target value Io2ref of the second DC-DC converter 21 (hereinafter simply referred to as an "output current target value" unless otherwise specified) is also input to the second DC-DC converter cross current target value generator 223. The second DC-DC converter cross current target value generator 223 generates the second DC-DC converter cross current target value (hereinafter simply referred to as a "cross current target value" unless otherwise specified) Icr2ref based on at least the output voltage value vo, the output current value io2, and the output current target value Io2ref. Here, the output voltage detection circuit 221 corresponds to the output voltage value acquisition unit and the Type 1 output voltage value acquisition unit of the present invention, and the output voltage (value) vo corresponds to the output voltage (value) and the Type 1 output voltage (value) of the present invention. The second DC-DC converter output current detection circuit 222 corresponds to the output current value acquisition unit and the Type 1 output current value acquisition unit of the present invention, and the output current (value) io2 corresponds to the output current (value) and the Type 1 output current (value) of the present invention. The output current target value Io2ref corresponds to the output current target value and the Type 1 output current target value of the present invention. The second DC-DC converter cross current target value generator 223 corresponds to the correction value generator of the present invention, and the cross current target value Icr2ref corresponds to the output current correction value and the Type 1 output current correction value of the present invention.

At the addition point 226, the cross current target value Icr2ref is subtracted from the output current value io2 and input to the droop gain multiplier 224. The input value is multiplied by the droop gain kd2 in the droop gain multiplier 224, and then subtracted from the second DC-DC converter output voltage target value vo2ref at the addition point 227. In this manner, at the addition point 228, the output voltage value vo is subtracted from the value obtained by subtracting, from the second DC-DC converter output voltage target value vo2ref, the value obtained by multiplying the value, obtained by subtracting the cross current target value Icr2ref from the output current value io2, by the droop gain kd2, and the resultant value is input to the compensator 225. Then, the output voltage vo2 of the second DC-DC converter 21 is controlled based on a command value output from the compensator 225. The value (virtual output current value to be described later) obtained by subtracting the cross current target value Icr2ref from the output current value io2 corresponds to the corrected output current value and the Type 1 corrected output current value of the present invention. The second DC-DC converter output voltage target value vo2ref corresponds to the output voltage target value and the Type 1 output voltage target value of the present invention. The droop gain multiplier 224 and the addition point 227 correspond to the droop controller and the Type 1 droop controller of the present invention.

The second DC-DC converter 21 performs a droop operation to droop the output voltage value vo2 in accordance with the output current value io2. However, as described above, the controller 22 of the second DC-DC converter 21 does not multiply the output current value io2 by the droop gain kd2, but multiplies the value, obtained by subtracting the cross current target value Icr2ref from the output current value io2, by the droop gain kd2. Fig. 2 is a diagram for explaining the principle of the droop control (hereinafter also referred to as the "main droop control" unless otherwise specified) performed by the controller 22 of the second DC-DC converter 21. Fig. 2 is a graph with the output current value io2 on the horizontal axis, and the output voltage value vo2 on the vertical axis. A straight line with a rightward slope kd2 from the output voltage target value Vo2ref, which is the intersection with the vertical axis, is a characteristic line PL of droop control. (Since the principle of Fig. 2 is commonly applied to the main droop control, "2" indicating the second DC-DC converter 21 is omitted in symbols.) The output current value io2 detected by the second DC-DC converter output current detection circuit 222 is indicated by a thin arrow Ar1 parallel to the horizontal axis. An intersection P1 between the arrow Ar1 and the characteristic line PL corresponds to the output voltage target value Vo2ref1. In the control system illustrated in Fig. 1, a value obtained by subtracting the cross current target value Icr2ref, indicated by a dash-dot arrow, from the output current value io2 is multiplied by the droop gain kd2. This means that in Fig. 2, the droop characteristic is applied to the output current value (virtual output current value) io2im, which is a value indicated by a thick arrow Ar2 parallel to the horizontal axis, the value being equal to the value obtained by subtracting the cross current target value Icr2ref indicated by the dash-dot arrow from the output current value io2. At this time, the output voltage target value Vo2ref decreases to an output voltage target value Vo2ref2 corresponding to an intersection P2 between the arrow Ar2 and the characteristic line PL. As described above, in the main droop control, the output voltage target value Vo2ref is not caused to droop to the output voltage target value Vo2ref1 obtained by the droop control based on the output current value io2, but is caused to droop to the output voltage target value Vo2ref2 obtained by the droop control based on a virtual output current value io2im. Here, the cross current target value Icr2ref corresponds to the output current correction value of the present invention, and the virtual output current value io2im corresponds to the corrected output current value of the present invention.

With the main droop control as described above, the second DC-DC converter 21 can be operated in parallel without exchanging information with the first DC-DC converter 11 connected in parallel, and the highly reliable DC power supply system 100 can be constructed. In addition, the output current and the like of each of the DC-DC converters 11, 21 operated in parallel can be controlled.

As described in the control system of the second DC-DC converter 21 with reference to Fig. 1, the cross current target value Icr2ref is generated based on the output voltage value vo, the output current value io2, and the output current target value Io2ref. The cross current target value Icr2ref may be generated based not only on these pieces of information but also on the amount of charge (the amount of dischargeable power), the charge rate, and the like of the storage battery 23. In the case of the droop control based on the output current value io2, the output voltage target value droops to Voref1 according to the characteristic line PL, and the second DC-DC converter 21 is subjected to constant voltage control to achieve this output voltage target value. However, in the main droop control, by using the cross current target value Icr2ref generated based on the output current target value Io2ref and the like, it is possible to realize control with a higher degree of freedom while performing the droop control. For example, by appropriately setting the cross current target value Icr2ref, the output voltage vo2 of the second DC-DC converter 21 can be controlled so that the output current value io2 approaches the output current target value Io2ref. When the output current target value Io2ref is large and the output current value io2 is small, the supply current at the load 3 is smaller than expected. In this manner, the magnitude of the amount of current supplied by the own device to load 3 may be determined from the difference between the output current target value Io2ref and the output current value io2, and the cross current target value Icr2ref may be adjusted in consideration of the determination. In addition, the cross current target value Icr2ref is set such that the output current value io2 is increased when the amount of charge of the storage battery 23 is large and the output current value io2 is decreased when the amount of charge of the storage battery 23 is small. Thereby, the discharge current can be shared in a well-balanced manner between the storage batteries without exchanging information by communication between the plurality of DC-DC converters to which the storage batteries are connected, and the discharge of the specific storage battery can be prevented from progressing. In a case where a photovoltaic (PV) module is connected to the second DC-DC converter 21 as the DC power supply, the cross current target value Icr2ref can be set such that the output current of the second DC-DC converter 21 increases when the generated power of the PV module is large. As described above, by determining the cross current target value Icr2ref in accordance with the state of the DC power supply connected to the second DC-DC converter 21, the second DC-DC converter 21 can be subjected to droop control to achieve a desired output current value io2.

A description will be given of control for supplying DC power to the load 3 by connecting a storage battery to each DC-DC converter equipped with the control system described above with the controller 22 of the second DC-DC converter 21 as an example, and operating a plurality of DC-DC converters connected in parallel. Hereinafter, three DC-DC converters will be described as an example. Each DC-DC converter is referred to as an nth device (n = 1, 2, and 3) (in the example of Fig. 1, the first DC-DC converter 11 is referred to as the first device, and the second DC-DC converter 21 is referred to as the second device). The output voltage target value is Voref, the output current of the nth device is ion, the cross current target value of the nth device is Icrnref, the droop gain of the nth device is kdn, the output voltage detection ratio of the nth device is $\alpha$sn, the output current detection ratio of the nth device is $\beta$sn, and the load resistance is Ro.

At this time, in the steady states of the three DC-DC converters, the following equation holds.

[Equation 1]

$$\begin{bmatrix} I_{o1} \\ I_{o2} \\ I_{o3} \end{bmatrix} = $$

$$\begin{bmatrix} R_o + k_{d1} \cdot \beta_{s1} & R_o & R_o \\ R_o & R_o + k_{d2} \cdot \beta_{s2} & R_o \\ R_o & R_o & R_o + k_{d3} \cdot \beta_{s3} \end{bmatrix}^{-1} \cdot \begin{bmatrix} \dfrac{V_{oref}}{\alpha_{s1}} + k_{d1} \cdot I_{cr1} \\ \dfrac{V_{oref}}{\alpha_{s2}} + k_{d2} \cdot I_{cr2} \\ \dfrac{V_{oref}}{\alpha_{s3}} + k_{d3} \cdot I_{cr3} \end{bmatrix}$$

[Equation 2]

$$V_o = R_o \cdot (I_{o1} + I_{o2} + I_{o3})$$

From the above equation, it can be seen that the output current ion can be controlled by the cross current target value Icrnref. However, to achieve an arbitrary output current ion, the above equation needs to be solved, which requires information on the circuit parameters $\alpha$sn and $\beta$sn and the load resistance Ro of the three DC-DC converters. In such a DC power supply system on the premise of exchange of information with another DC-DC converter operated in parallel as described above, the reliability and degree of freedom of the system are reduced.

On the other hand, since each DC-DC converter can detect the output current of the own device as described above, a suitable DC power supply system can be realized in the following two operational states.

Operational state 1: In the DC power supply system, at least one DC-DC converter performs droop control in which the target value is not set.

Operational state 2: The sum of the target current values of all the DC-DC converters constituting the DC power supply system is equal to the load current.

(Operational state 1)

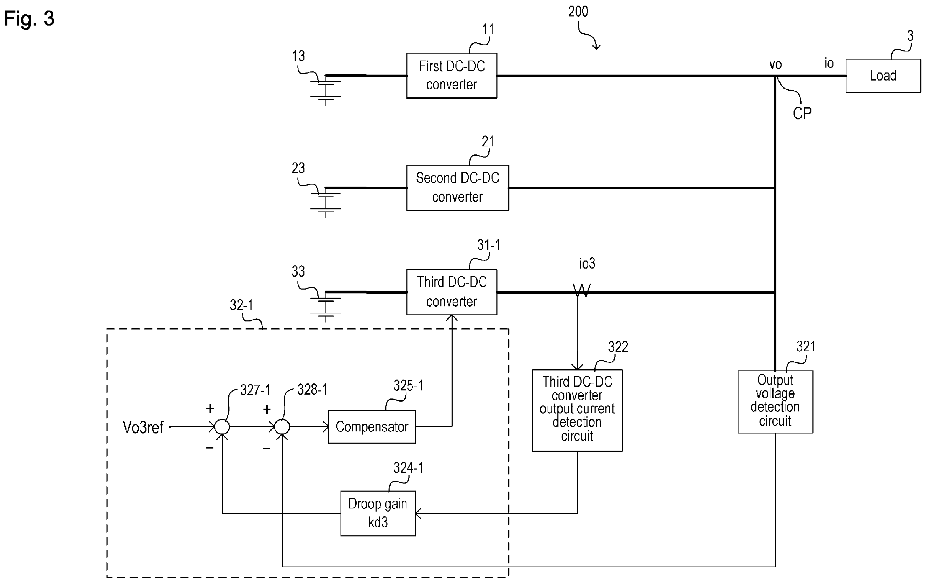

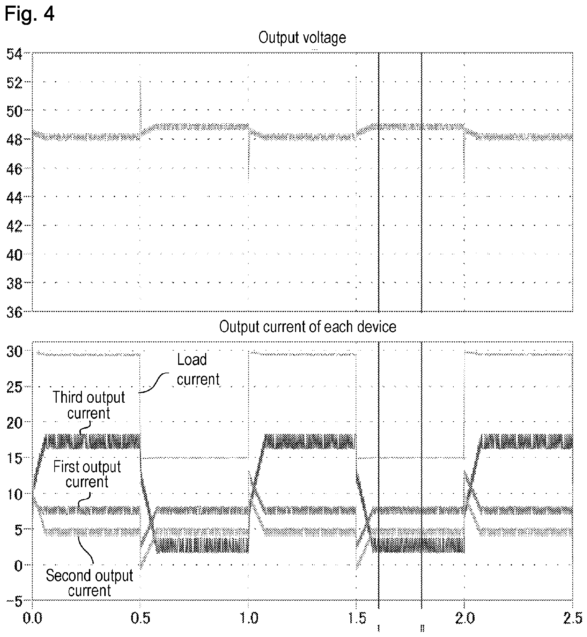

Fig. 4 illustrates simulation results of a DC power supply system 200 in operational state 1. Here, the DC power supply system 200 includes a first DC-DC converter 11, a second DC-DC converter 21, and a third DC-DC converter 31-1. Fig. 3 is a block diagram of the DC power supply system 200. Fig. 3 illustrates only a control system of a controller 32-1 of the third DC-DC converter 31-1. The control systems of the first DC-DC converter 11 and the second DC-DC converter 21 are similar to those in Fig. 1, and thus are omitted. The third DC-DC converter 31-1, to which a storage battery 33 is connected, includes an output voltage detection circuit 221, a third DC-DC converter output current detection circuit 322, and a controller 32-1. The controller 32-1 includes a droop gain (kd3) multiplier 324-1, a compensator 325-1, and addition points 327-1, 328-1. Here, a value obtained by multiplying the output current value io3, detected by the third DC-DC converter output current detection circuit 322, by the droop gain kd3 is subtracted from an output voltage target value Vo3ref at the addition point 327-1. The output voltage value vo is subtracted from the value thus obtained at the addition point 328-1 and input to the compensator 325-1. The compensator 325-1 outputs a command value, and an output voltage vo3 of the third DC-DC converter 31-1 is controlled based on the command value. Here, the storage battery 33 corresponds to the type 2 DC power supply of the present invention, the first DC-DC converter 11 and the second DC-DC converter 21 correspond to the type 1 power conversion device of the present invention, and the third DC-DC converter 31-1 corresponds to the type 2 power conversion device of the present invention. In addition, the controller 32-1 corresponds to the Type 2 controller of the present invention, the output voltage detection circuit 321 corresponds to the Type 2 output voltage value acquisition unit of the present invention, and the output voltage (value) vo corresponds to the Type 2 output voltage (value) of the present invention. The third DC-DC converter output current detection circuit 322 corresponds to the Type 2 output current value acquisition unit of the present invention, and the output current (value) io3 corresponds to the Type 2 output current (value) of the present invention. The third DC-DC converter output voltage target value Vo3ref corresponds to the Type 2 output voltage target value of the present invention. The droop gain multiplier 324-1 and the addition point 327-1 correspond to the Type 2 droop controller of the present invention.

The upper diagram of Fig. 4 illustrates the simulation result of the output voltage value vo with the time on the horizontal axis and the voltage value on the vertical axis. The lower diagram of Fig. 4 illustrates the simulation results of the load current flowing to the load 3, the output current (first output current) of the first DC-DC converter 11, the output current (second output current) of the second DC-DC converter 21, and the output current (third output current) of the third DC-DC converter 31-1, with the time on the horizontal axis and the current value on the vertical axis. Here, the output voltage target value Voref is 47 V, the output current target value Io1ref of the first DC-DC converter 11 is 8 A, and the output current target value Io2ref of the second DC-DC converter 21 is 5A. As illustrated in the upper diagram of Fig. 4, the output voltage is nearly stable. As illustrated in the lower diagram of Fig. 4, even when the load current suddenly changes, the first output current and the second output current, which are the output currents of the first DC-DC converter 11 and the second DC-DC converter 21 to be subjected to the main droop control, have values consistent with the target values. On the other hand, the third output current, which is the output current of the third DC-DC converter 31-1 to be subjected to the droop control in which the target value is not set, greatly changes in accordance with the change in the load current.

As described above, in the parallel operation control of the plurality of DC-DC converters, which are the first, second, and third DC-DC converters 11, 21, 31-1 each connected to the storage battery, at least one DC-DC converter, which is the third DC-DC converter 31-1, performs droop control in which the target value is not set, and the other DC-DC converters, which are the first and second DC-DC converters 11, 21, perform the main droop control in which the target value is set. Therefore, it is possible to perform control to achieve a desired output voltage, and it is also possible to perform control to achieve a desired output current for the first and second DC-DC converters 11, 21 that perform the main droop control in which the target value of the output current is set except for the third DC-DC converter 31-1 in which the target value of the output current is not set.

Here, the DC power supply system 200 is constituted by: two converters, which are the first DC-DC converter 11 and the second DC-DC converter 21, to perform the main droop control; and one converter, which is the third DC-DC converter 31-1, to perform the general droop control in which the target value is not set. However, it is sufficient to provide a plurality of DC-DC converters that perform the main droop control and one or more DC-DC converters that perform the general droop control in which the target value is not set, and the number of DC-DC converters constituting the system is not limited thereto.

(Operational state 2)

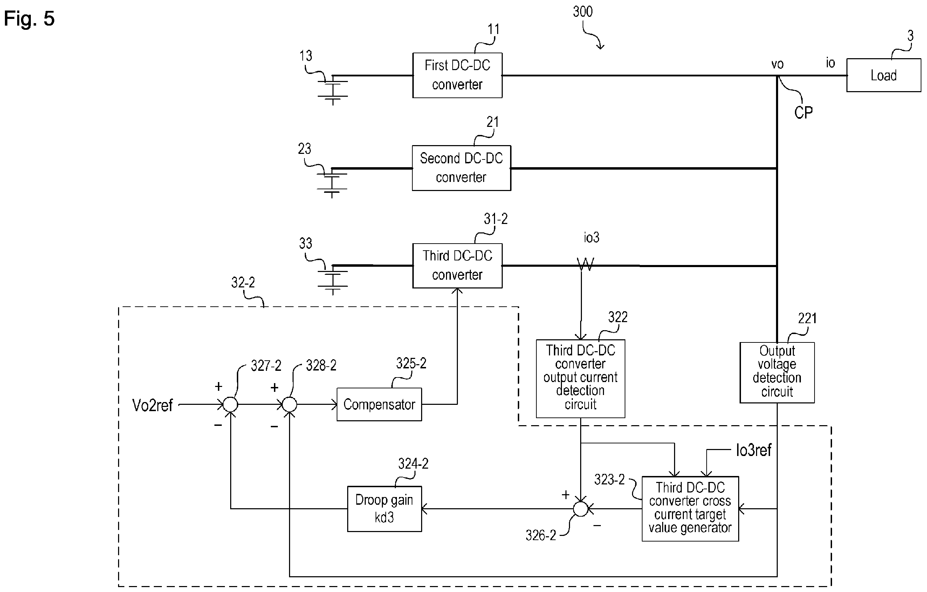

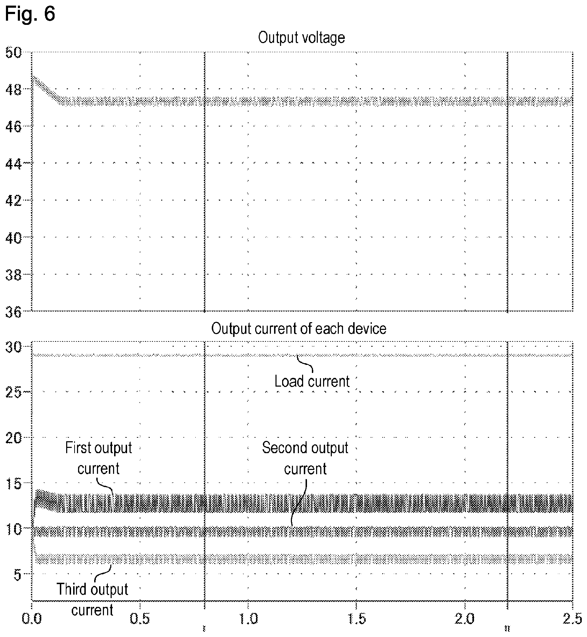

Fig. 5 illustrates a schematic configuration of a DC power supply system 300 in operational state 2, and Fig. 6 illustrates simulation results. Here, the DC power supply system 300 includes a first DC-DC converter 11, a second DC-DC converter 21, and a third DC-DC converter 31-2. Each of the first DC-DC converter 11, the second DC-DC converter 21, and the third DC-DC converter 31-2 performs the main droop control in which the target value of the output current is set. The controller of the first DC-DC converter 11 is configured in the same manner as the controller 22 of the second DC-DC converter 21 illustrated in Fig. 1, and the controller 22 of the second DC-DC converter 21 is also configured in the same manner as illustrated in Fig. 1. The third DC-DC converter 31-2 includes an output voltage detection circuit 221, a third DC-DC converter output current detection circuit 322, and a controller 32-2. The controller 32-2 includes a third DC-DC converter cross current target value generator 323-2, a droop gain (kd3) multiplier 324-2, a compensator 325-2, and addition points 326-2, 327-2, 328-2. Configurations similar to those of the controller 32-1 of the third DC-DC converter 31-1 are denoted by similar symbols, and a detailed description thereof will be omitted. The third DC-DC converter cross current target value generator 323-2 has a function similar to that of the second DC-DC converter cross current target value generator 223-2. Here, the third DC-DC converter 31-2 corresponds to the power conversion device of the present invention, and the controller 32-2 corresponds to the controller of the present invention. The output voltage detection circuit 321 corresponds to the output voltage value acquisition unit of the present invention, and the output voltage (value) vo corresponds to the output voltage (value) of the present invention. The third DC-DC converter output current detection circuit 322 corresponds to the output current value acquisition unit of the present invention, and the output current (value) io3 corresponds to the output current (value) of the present invention. The output current target value Io3ref corresponds to the output current target value of the present invention. The third DC-DC converter cross current target value generator 323-2 corresponds to the correction value generator of the present invention, and the cross current target value Icr3ref corresponds to the output current correction value of the present invention. A value obtained by subtracting the cross current target value Icr3ref from the output current value io3 corresponds to the corrected output current value of the present invention. The third DC-DC converter output voltage target value Vo3ref corresponds to the output voltage target value of the present invention. The droop gain multiplier 324-2 and the addition point 327-2 correspond to the droop controller of the present invention.

The upper diagram of Fig. 6 illustrates the simulation result of the output voltage value vo with the time on the horizontal axis and the voltage value on the vertical axis. The lower diagram of Fig. 6 illustrates the simulation results of the load current flowing to the load 3, the output current (first output current) of the first DC-DC converter 11, the output current (second output current) of the second DC-DC converter 21, and the output current (third output current) of the third DC-DC converter 31-2, with the time on the horizontal axis and the current value on the vertical axis. Here, the output voltage target value Voref is 47 V, the output current target value Io1ref of the first DC-DC converter 11 is 12A, the output current target value Io2ref of the second DC-DC converter 21 is 10A, and the output current target value Io3ref of the third DC-DC converter 31-2 is 7A. The sum of the output current target values of the first DC-DC converter 11, the second DC-DC converter 21, and the third DC-DC converter 31-2 is consistent with a load current of 29 A.

At this time, as illustrated in the upper diagram of Fig. 6, the output voltage value vo is stable at 47 V. As illustrated in the lower diagram of Fig. 6, the load current is stabilized at 29 A, and the first output current, the second output current, and the third output current are stabilized at target values of 12 A, 10 A, and 7 A, respectively.

As described above, in the parallel operation control of the plurality of DC-DC converters, which are the first, second, and third DC-DC converters 11, 21, 31-2 each connected to the storage battery, all of the first, second, and third DC-DC converters 11, 21, 31-2 perform the main droop control in which the output current target value is set. In a state where the sum of the output current target values of the first, second, and third DC-DC converters 11, 21, 31-2 is consistent with the load current, it is possible to perform control to achieve a desired output voltage, and it is also possible to perform control to achieve a desired output current for the first, second, and third DC-DC converters 11, 21, 31-2 that perform the main droop control in which the target value of the output current is set.

Modification 1

Similarly to the DC power supply system 300, a DC power supply system according to Modification 1 includes a first DC-DC converter 11, a second DC-DC converter 21, and a third DC-DC converter 31-2. Similarly to the DC power supply system 300, the first DC-DC converter 11, the second DC-DC converter 21, and the third DC-DC converter 31-2 each perform the main droop control in which the target value of the output current is set. Here, the load current is changed by 30 A and 15 A as a guide, the output current target value Io1ref of the first DC-DC converter 11 is 12 A, the output current target value Io2ref of the second DC-DC converter 21 is 10 A, and the output current target value Io3ref of the third DC-DC converter 31-2 is 4 A. Both 30 A and 15 A of the load current are different from 26 A, which is the sum of the output current target values Io1ref, Io2ref, and Io3ref.

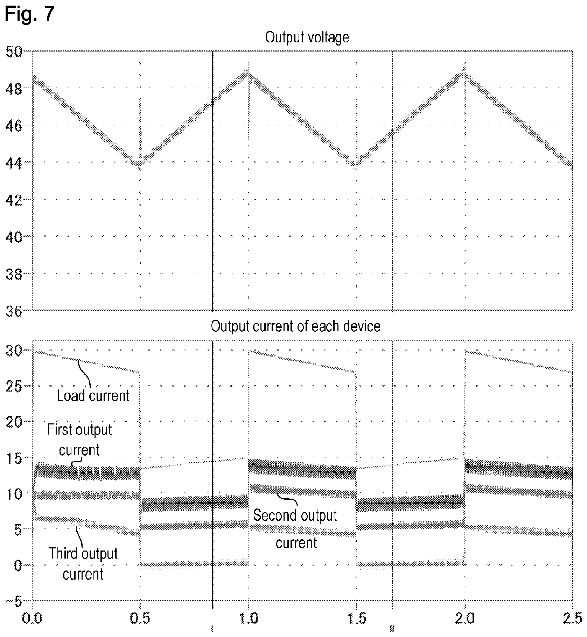

Fig. 7 illustrates the simulation result of the DC power supply system when the load current and the output current target value are set as described above. The upper diagram of Fig. 7 illustrates the simulation result of the output voltage value vo with the time on the horizontal axis and the voltage value on the vertical axis. The lower diagram of Fig. 7 illustrates the simulation results of the load current flowing to the load 3, the output current (first output current) of the first DC-DC converter 11, the output current (second output current) of the second DC-DC converter 21, and the output current (third output current) of the third DC-DC converter 31-2, with the time on the horizontal axis and the current value on the vertical axis. Although each of the first, second, and third DC-DC converters 11, 21, 31-2 control the output current to be the target value, the fluctuation of the output voltage is considerably large.

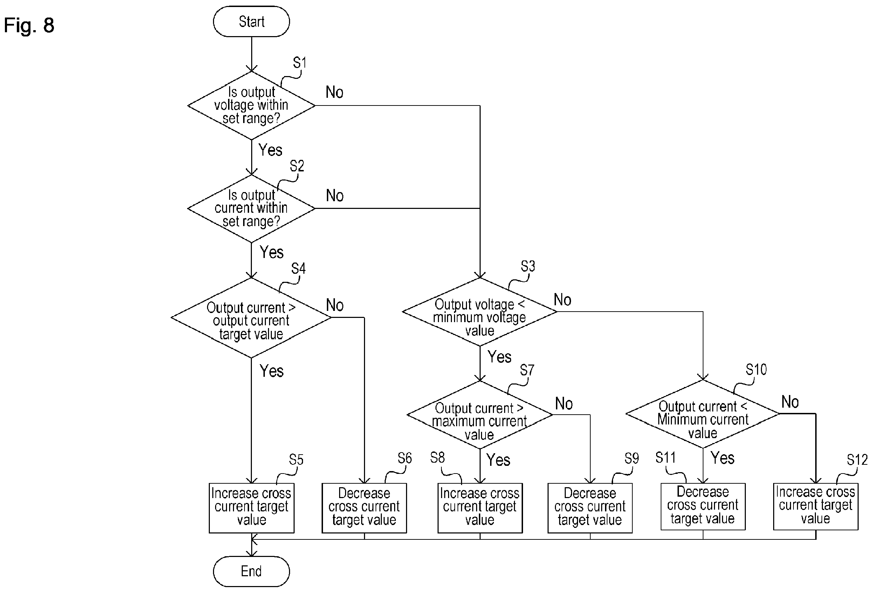

As described above, in a DC power supply system including a plurality of DC-DC converters that perform the main droop control in which the output current target value is set, control including an algorithm for adjusting a cross current target value so that the output voltage falls within a set range will be described. Fig. 8 is a flowchart illustrating a procedure for a cross current target value adjustment process. Here, each of the DC-DC converters executes the process illustrated in the flowchart illustrated in Fig. 8. Taking the second DC-DC converter 21 as an example, this is a process performed when the second DC-DC converter cross current target value generator 223 of the controller 22 generates the cross current target value Icr2ref. As illustrated in Fig. 7 as well, in the cross current target value adjustment process, each DC-DC converter performs the process based on the output voltage and the output current that can be measured by the own device. The set range of the output voltage (including the minimum voltage value) and the set range of the output current (including the maximum current value and the minimum current value) to be described later are determined by, for example, the specifications of the DC-DC converters 11, 21, 31-2 to which the storage batteries 13, 23, 33 are connected, respectively.

First, the controller determines whether the detected output voltage is within the set range (step S1). Here, the set range of the output voltage corresponds to the predetermined output voltage range of the present invention, and whether the output voltage is within the set range and whether the output voltage is smaller than the minimum voltage to be described later correspond to the relationship between the output voltage value of the present invention and the predetermined set range.

When it is determined in step S1 that the output voltage is within the set range, the controller determines whether the detected output current is within the set range (step S2). The set range of the output current corresponds to the predetermined output current range of the present invention, and whether the output current to be described later is within the set range, whether the output current is larger than the maximum current value to be described later, and whether the output current is smaller than the minimum current value correspond to the relationship between the output current value of the present invention and the predetermined set range.

When it is determined in step S1 that the output voltage is not within the set range, the controller determines whether the output voltage is smaller than the minimum voltage value (step S3).

When it is determined in step S2 that the output current is within the set range, the controller determines whether the output current is larger than the output current target value (step S4).

When it is determined in step S4 that the output current is larger than the output current target value, the controller increases the cross current target value (step S5) and ends the process.

When it is determined in step S4 that the output current is equal to or less than the output current target value, the controller decreases the cross current target value (step S6) and ends the process.

When it is determined in step S3 that the output voltage is smaller than the minimum voltage value, the controller determines whether the output current is larger than the maximum current value (step S7).

When it is determined in step S7 that the output current is larger than the maximum current value, the controller increases the cross current target value (step S8), and ends the process.

When it is determined in step S7 that the output current is equal to or less than the maximum current value, the controller decreases the cross current target value (step S9), and ends the process.

When it is determined in step S3 that the output voltage is greater than or equal to the minimum voltage value, the controller determines whether the output current is less than the minimum current value (step S10).

When it is determined in step S10 that the output current is smaller than the minimum current value, the controller decreases the cross current target value (step S11) and ends the process.

When it is determined in step S10 that the output current is equal to or larger than the minimum current value, the controller increases the cross current target value (step S12) and ends the process.

According to the above algorithm, taking advantage of the feature of the droop control, when the output voltage is the upper limit value or the lower limit value of the set range, it is determined that the current supply is excessively small or excessively large, and the cross current target value is adjusted. Accordingly, it is possible to realize an approximate equilibrium state different from the output current target value.

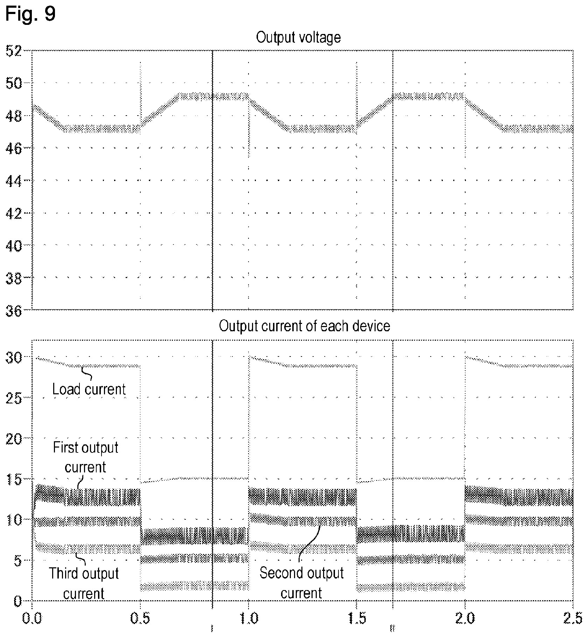

Fig. 9 illustrates the simulation results of the DC power supply system when the control is performed according to the above algorithm. The upper diagram of Fig. 9 illustrates the simulation result of the output voltage value vo with the time on the horizontal axis and the voltage value on the vertical axis. The lower diagram of Fig. 9 illustrates the simulation results of the load current flowing to the load 3, the output current (first output current) of the first DC-DC converter 11, the output current (second output current) of the second DC-DC converter 21, and the output current (third output current) of the third DC-DC converter 31-2, with the time on the horizontal axis and the current value on the vertical axis.

Here, the upper limit value and the lower limit value of the output voltage are set to 49 V and 47 V, respectively, and it can be confirmed that the output voltage falls within that range as illustrated in the upper diagram of Fig. 9.

Here, the output current target value Io1ref of the first DC-DC converter 11 is 12 A, the output current target value Io2ref of the second DC-DC converter 21 is 10 A, the output current target value Io3ref of the third DC-DC converter 31-2 is 7 A, and the sum of the output current target values is 29 A. As illustrated in the lower diagram of Fig. 9, when the sum of the output current target values is close to the load current, it can be seen that each output current is substantially the target value.

Modification 2

Since the controller of each DC-DC converter can determine the magnitude of the amount of current supplied by the own device from the difference between the output current target value and the output current, it is also possible to update the output current target value to improve the operation efficiency of the DC power supply system.

Note that the configurations of the above embodiment may be combined in an allowable manner without departing from the problem and technical idea of the present invention. For example, in the embodiment described above, the example in which the present invention is applied to the DC power supply system including the storage battery as a distributed power supply has been described. However, the present invention can be applied to a DC power supply system including a solar power generation module as a distributed power supply. The present invention can also be applied to a DC power supply system using energy, such as a fuel cell module, a gas engine module, a wind power generation module, a tidal power generation module, a hydraulic power generation module, and a geothermal power generation module, or a combination thereof, instead of the solar power generation module.

<Supplementary Note 1>

A power conversion device (11, 21) that steps up, steps up and down, or steps down DC power input from a DC power supply (23) and outputs the DC power, the power conversion device including:

an output current value acquisition unit (222) configured to acquire an output current value output from the power conversion device (21);
an output voltage value acquisition unit (221) configured to acquire an output voltage value output from the power conversion device (21); and
a controller (22) configured to control an output voltage output from the power conversion device (21),
in which the controller (22) includes

a correction value generator (223) configured to generate an output current correction value for correcting the output current value, based on an output current target value that is a target value of an output current output from the power conversion device (21), and the output current value, and
a droop controller (224, 226, 227) configured to droop an output voltage target value that is a target value of the output voltage output from the power conversion device (21), based on a corrected output current value that is the output current value corrected using the output current correction value, and

the output voltage is controlled based on the output voltage target value dropped and the output voltage value.

DESCRIPTION OF SYMBOLS

| 100 | DC power supply system |
| 21 | second DC-DC converter |
| 22 | controller |
| 223 | second DC-DC converter cross current target value generator |
| 224 | droop gain multiplier |
| 226, 227 | addition point |

**Claims**

1. A power conversion device that steps up, steps up and down, or steps down direct current (DC) power input from a DC power supply and outputs the DC power, the power conversion device comprising:

an output current value acquisition unit configured to acquire an output current value output from the power conversion device;
an output voltage value acquisition unit configured to acquire an output voltage value output from the power conversion device; and
a controller configured to control an output voltage output from the power conversion device,
wherein the controller includes

a correction value generator configured to generate an output current correction value for correcting the output current value, based on an output current target value that is a target value of an output current output from the power conversion device, and the output current value, and
a droop controller configured to droop an output voltage target value that is a target value of the output voltage output from the power conversion device, based on a corrected output current value that is the output current value corrected using the output current correction value, and

the output voltage is controlled based on the output voltage target value dropped and the output voltage value.

**2.** The power conversion device according to claim 1, wherein the correction value generator adjusts the output current correction value, based on a difference between the output current target value and the output current value.

**3.** A direct current (DC) power supply system comprising:

a Type 1 power conversion device; and
a Type 2 power conversion device,
the Type 1 power conversion device being configured to step up, step up and down, or step down DC power input from a Type 1 DC power supply and outputting the DC power,
the Type 1 power conversion device including

a Type 1 output current value acquisition unit configured to acquire a Type 1 output current value output from the Type 1 power conversion device,
a Type 1 output voltage value acquisition unit configured to acquire a Type 1 output voltage value output from the Type 1 power conversion device, and
a Type 1 controller configured to control a Type 1 output voltage output from the Type 1 power conversion device,

the Type 1 controller including

a correction value generator configured to generate a Type 1 output current correction value for correcting the Type 1 output current value, based on a Type 1 output current target value that is a target value of a Type 1 output current output from the Type 1 power conversion device, and the Type 1 output current value, and
a Type 1 droop controller configured to droop a Type 1 output voltage target value that is a target value of the Type 1 output voltage output from the Type 1 power conversion device, based on a Type 1 corrected output current value that is the Type 1 output current value corrected using the Type 1 output current correction value,

the Type 1 output voltage being controlled based on the Type 1 output voltage target value dropped and the Type 1 output voltage value,
the Type 2 power conversion device being configured to step up, step up and down, or step down DC power input from a Type 2 DC power supply and outputting the DC power,
the Type 2 power conversion device including

a Type 2 output current value acquisition unit configured to acquire a Type 2 output current value output from the Type 2 power conversion device,
a Type 2 output voltage value acquisition unit configured to acquire a Type 2 output voltage value output from the Type 2 power conversion device, and
a Type 2 controller configured to control a Type 2 output voltage output from the Type 2 power conversion device,

the Type 2 controller including a Type 2 droop controller configured to droop a Type 2 output voltage target value that is a target value of the Type 2 output voltage output from the Type 2 power conversion device, based on the Type 2 output current value,
the Type 2 output voltage being controlled based on the Type 2 output voltage target value dropped and the Type 2 output voltage value, and
a plurality of the Type 1 power conversion devices and one or more of the Type 2 power conversion devices being connected in parallel to supply DC power to a load.

**4.** A direct current (DC) power supply system comprising

a plurality of power conversion devices configured to step up, step up and down, or step down DC power input from a DC power supply and output the DC power,
the DC power supply system supplying a load with DC power output from the plurality of power conversion devices connected in parallel,
each of the power conversion devices including

an output current value acquisition unit configured to acquire an output current value output from the power conversion device,
an output voltage value acquisition unit configured to acquire an output voltage value output from the power conversion device, and
a controller configured to control an output voltage output from the power conversion device,

the controller including

a correction value generator configured to generate an output current correction value for correcting the output current value, based on an output current target value that is a target value of an output current output from the power conversion device, and the output current value, and
a droop controller configured to droop an output voltage target value that is a target value of the output voltage output from the power conversion device, based on a corrected output current value that is the output current value corrected using the output current correction value,

the output voltage being controlled based on the output voltage target value dropped and the output voltage value, and
a sum of the output current target value, for each of the plurality of the power conversion devices, being equal to a load current supplied to the load.

5.  A direct current (DC) power supply system comprising

a plurality of power conversion devices configured to step up, step up and down, or step down DC power input from a DC power supply and output the DC power,
the DC power supply system supplying a load with DC power output from the plurality of power conversion devices connected in parallel,
each of the power conversion devices including

an output current value acquisition unit configured to acquire an output current value output from the power conversion device,
an output voltage value acquisition unit configured to acquire an output voltage value output from the power conversion device, and
a controller configured to control an output voltage output from the power conversion device,

the controller including

a correction value generator configured to generate an output current correction value for correcting the output current value, based on an output current target value that is a target value of an output current output from the power conversion device, and the output current value, the correction value generator being configured to increase or decrease the output current correction value in accordance with a relationship between the output voltage value and a predetermined output voltage range, and a relationship between the output current value and a predetermined output current range, and
a droop controller configured to droop an output voltage target value that is a target value of the output voltage output from the power conversion device, based on a corrected output current value that is the output current value corrected using the output current correction value, and

the output voltage being controlled based on the output voltage target value dropped and the output voltage value.

Fig. 1

First DC-DC converter — 11

PwL1

100

PwL0

vo    io

Load — 3

13

CP

Second DC-DC converter — 21

PwL2    io2

23

22

Vo2ref

227    228

225 Compensator

Second DC-DC converter output current detection circuit — 222

Output voltage detection circuit — 221

Io2ref

224 Droop gain kd2

223 Second DC-DC converter cross current target value generator

226

Fig. 2

**Fig. 3**

EP 4 395 148 A1

Fig. 4

Fig. 5

## Fig. 6

Output voltage

Output current of each device

Fig. 7

Output voltage

Output current of each device

Load current

First output
current

Second output
current

Third output
current

Fig. 8

EP 4 395 148 A1

**Fig. 9**

Output voltage

Output current of each device

Load current

First output
current

Third output
current

Second output
current

## INTERNATIONAL SEARCH REPORT

| International application No. |
| --- |
| **PCT/JP2022/035991** |

**A. CLASSIFICATION OF SUBJECT MATTER**

*H02M 3/00*(2006.01)i; *H02J 1/00*(2006.01)i
FI: H02M3/00 H; H02M3/00 W; H02J1/00 306K

According to International Patent Classification (IPC) or to both national classification and IPC

**B. FIELDS SEARCHED**

Minimum documentation searched (classification system followed by classification symbols)

H02M3/00; H02J1/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2019/012725 A1 (MITSUBISHI ELECTRIC CORP.) 17 January 2019 (2019-01-17) <br> entire text, all drawings | 1-5 |
| A | JP 2007-135373 A (NIPPON TELEGR. & TELEPH. CORP.) 31 May 2007 (2007-05-31) <br> entire text, all drawings | 1-5 |
| A | JP 2003-79069 A (HITACHI, LTD.) 14 March 2003 (2003-03-14) <br> entire text, all drawings | 1-5 |

☐ Further documents are listed in the continuation of Box C.  ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **04 November 2022** | **22 November 2022** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2022/035991**

| Patent document cited in search report | | | Publication date (day/month/year) | Patent family member(s) | | | Publication date (day/month/year) |
|---|---|---|---|---|---|---|---|
| WO | 2019/012725 | A1 | 17 January 2019 | US 2020/0099305 A1 entire text, all drawings CN 110832762 A | | | |
| JP | 2007-135373 | A | 31 May 2007 | (Family: none) | | | |
| JP | 2003-79069 | A | 14 March 2003 | JP 2007-209195 A1 | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020120465 A